# EUROPÄISCHE PATENTSCHRIFT

(11) **EP 0 619 348 B1**
(45) Veröffentlichungstag und Bekanntmachung des Hinweises auf die Patenterteilung: **17.06.1998**
(21) Anmeldenummer: 94103569.3
(22) Anmeldetag: 09.03.1994
(51) Int. Cl.: C09D 4/00

(54) **Abwaschbare Imprägnierflüssigkeit und deren Verwendung**
Washable impregnating liquid and its use
Liquide d'imprégnation lavable et son emploi

(30) Priorität: 07.04.1993 DE 4311387; 19.08.1993 DE 4327862
(43) Veröffentlichungstag der Anmeldung: 12.10.1994
(73) Patentinhaber: Agomer Gesellschaft mit beschränkter Haftung, 63457 Hanau (DE)
(72) Erfinder: Koch, Klaus-Uwe, Dr., D-63457 Hanau (DE); Mich, Heidi, D-63110 Rodgau (DE)
(74) Vertreter: Weber, Wolfgang

(56) Entgegenhaltungen:
- WO-A-88/04675
- FR-A- 2 362 167
- US-A- 5 098 743

## Beschreibung

Die Erfindung betrifft eine Imprägnierflüssigkeit auf (Meth)acrylat-Basis sowie deren Verwendung in einem Imprägnierverfahren.

Poröse Gegenstände, insbesondere Metallgußstücke oder Sintermetallstücke, werden gewöhnlich mit einem Imprägniermittel versiegelt. Dies ist notwendig, um die Gegenstände widerstandsfähig gegen Flüssigkeits- oder Gasdruck zu machen, wie er im Gebrauch, z. B. bei Motor- oder Getriebeteilen, auftritt. Durch die Imprägnierung sollen einerseits an der Oberfläche des zu imprägnierenden Gegenstandes befindliche Poren gefüllt und andererseits durchgehende Poren sicher verschlossen werden. Insbesondere die letzteren verursachen bei ungenügendem Verschluß Leckagen, die zu einem Ausfall des entsprechenden Teils im Betrieb führen.

Seit über 20 Jahren sind verschiedene Verfahren zum Füllen bzw. Verschließen solcher Poren bekannt, die sich insbesondere in Kaltimprägnierung und Warmimprägnierung unterteilen lassen. Bei der Kaltimprägnierung, z. B. beschrieben in EP-A 0 421 567, 0 101 267 wird die Härtung entweder durch Füllen der Poren mit einem härtbaren Monomerengemisch und anschließender Oberflächenbehandlung mit einem Katalysator oder durch Füllen der Poren mit einer an Luft inhibierten Imprägnierflüssigkeit und Aushärten dieser Imprägnierflüssigkeit unter Luftausschluß durchgeführt.

Bei einer anderen Verfahrensweise werden die Poren mit einem warmhärtenden Imprägniermittel gefüllt und in heißem Wasser ausgehärtet. Dieses Verfahren ist u. a. beschrieben in DE 27 18 770 A und DE-PS 19 26 126.

All diesen Verfahren ist gemeinsam, daß das Füllen der Poren gewöhnlich durch Eintauchen in die Imprägnierflüssigkeit, ggf. unter Anlegen von Vakuum, und anschließendem Abwaschen der Imprägnierflüssigkeit von der Oberfläche des Gegenstandes durchgeführt wird, wobei die Härtung erst anschließend erfolgt. Gerade das Abwaschen der Imprägnierflüssigkeit von der Oberfläche bereitet dabei Probleme, da die Imprägnierflüssigkeit einerseits nicht zu gut wasserlöslich sein darf, da sonst auch die Poren freigewaschen werden, und andererseits die Imprägnierflüssigkeit von der glatten Oberfläche des Gegenstandes möglichst vollständig abwaschbar sein soll, damit sich kein Harzfilm an der Oberfläche der Gegenstände bildet. Schwierige Oberflächen sind insbesondere Präzisionsbohrungen, in die Zylinder, Lager eingesetzt werden, und Gewindebohrungen. Insbesondere in letzteren führen Harzrückstände beim Eindrehen einer Schraube zum Platzen der Gewindebuchse. Ein gutes Imprägniermittel soll somit nach Aushärtung zu einem temperaturstabilen und möglichst Lösungsmittel-resistenten Harz führen und vor der Aushärtung von der Oberfläche des zu imprägnierenden Gegenstandes leicht abwaschbar sein, wobei letzteres schon durch bloßes Eintauchen in Wasser erfolgen soll.

Die WO 88/04675 beschreibt eine Imprägnierflüssigkeit enthaltend 25 - 65 % Hydroxyalkyl(meth)acrylat (HPMA), 15 - 70 % höheres Alkyl(meth)acrylat (z. B. Laurylmethacrylat), 5 - 20 % Vernetzer sowie Radikalbildner und Inhibitor, wobei die eingesetzten längerkettigen Alkylmethacrylatester und/oder polyfunktionellen Methacrylatester aus einer Umesterungsreaktion in Gegenwart von Organotitan-Verbindungskatalysatoren stammen, wobei die Katalysatorreste nicht aus den Monomeren entfernt worden sind. Dies soll zu einer Erniedrigung der Oberflächenspannung und zu einem verbesserten Benetzungs-und Adhäsionsverhalten führen.

Aufgabe der vorliegenden Erfindung ist ein Imprägniermittel, das für Kalt- wie Warmhärtung geeignet sein soll und das sich insbesondere von der Oberfläche des zu imprägnierenden Gegenstandes leicht abwaschen läßt sowie dessen Verwendung in einem entsprechenden Imprägnierverfahren.

Gelöst wird diese Aufgabe mit einer Imprägnierflüssigkeit gemäß Anspruch 1. Diese Imprägnierflüssigkeit kann entsprechend ihrem Einsatzzweck mit verschiedenen polymerisationsbeeinflußenden Komponenten vermischt oder nach der Porenfüllung behandelt werden, wobei insbesondere die warmhärtenden polymerisationsbeeinflußenden Komponenten bevorzugt sind.

Die erfindungsgemäße Imprägnierflüssigkeit enthält
A in Wasser zumindest zum Teil lösliches (Meth)acrylat bestehend aus 50-85 Gew.-%
   a in Wasser zu mind. 20 Gew.-% lösliches (Meth)acrylat und/oder bis 85 Gew.-%
   b in Wasser zu mind. 5 Gew.-% und weniger als 20 Gew.-% lösliches Hydroxyalkyl(meth)acrylat bis 80 Gew.-%
B ethylenisch ungesättigtes Monomer mit C₈-C₂₀-Alkylrest 4-40 Gew.-%
C Tensid 4-40 Gew.-%
gegebenenfalls D copolymerisierbare Monomere, limitiert auf 5 Gew.-%
gegebenenfalls E Vernetzer, limitiert auf max. 30 Gew.-%
   sowie
gegebenenfalls F einen Radikalbildner und einen Inhibitor,
wobei die A/B-Verhältnisse zwischen 1,25 und 10 liegen, die einzelnen Komponenten derart aufeinander abgestimmt sind, daß 1 ml der Imprägnierflüssigkeit aus ca. 10 cm Höhe über 1 min in 50 ml Wasser der Temperatur 90 °C getropft, spätestens nach weiteren 15 s zu mind. 90 % emulgiert ist und sich alle Gew.-%-Angaben (auch a und b) auf die Summe der Komponenten A-D beziehen.

Zusätzlich können noch weitere übliche Komponenten, wie Inhibitoren, Härter, Weichmacher enthalten sein, solange diese die für die Imprägnierung notwendigen Eigenschaften (s. u.) nicht aufheben.

Diese Imprägnierflüssigkeit findet insbesondere Verwendung zur Imprägnierung eines porösen festen Körpers, wie metallische Guß- oder Sinterteile.

Besonders gute Abwaschbarkeit ergibt sich beim Einsatz der Komponente A zu 60-80 Gew.-%. Außerdem ist die Komponente Aa bevorzugt, da sich im Zusammenspiel dieser Komponente mit der Komponente B die beste Emulgierbarkeit der an einer Oberfläche eines zu imprägnierenden Gegenstandes anhaftenden Imprägnierflüssigkeit ergibt.

Meist ist die Limitierung von Vernetzern vorteilhaft, da sonst das Polymerisat zu leicht versprödet und außerdem die Abwaschbarkeit deutlich nachläßt. Dies gilt besonders, wenn die Komponente Ab zum Einsatz kommt, insbesondere wenn diese den überwiegenden Teil der Komponente A ausmacht. Aus dem Grund sind Vernetzer, sofern sie überhaupt eingesetzt werden, normalerweise auf max. 30 Gew.-%, vorteilhaft auf max. 10 Gew.-% und insbesondere die Verwendung von (meth)acrylischen Vernetzern auf max. 6 Gew.-% limitiert. Außerdem ist es beim Einsatz der Komponente Ab, insbesondere bei deren überwiegenden Einsatz, vorteilhaft, wenn die Komponente B bei max. 35 Gew.-% liegt. Allgemein wird besonders vorteilhaft die Komponente B zu 5 - 20 Gew.-% eingesetzt.

Üblicherweise sind für die Komponente C 4 - 20 Gew.-% vorteilhaft, beim Einsatz der Komponente Ab, insbesondere wenn diese Komponente überwiegt, ist eine leichte Erhöhung der Untergrenze der Komponente C, d. h. mind. 5 Gew.-%, bevorzugt.

Üblicherweise kann Weichmacher in der Gesamtmischung zu bis zu 20 Gew.-%, günstig zu ≥ 2 Gew.-% und vorteilhaft zu 3 - 5 Gew.-% enthalten sein, wobei dieser z. B. mit einem Härter zugegeben werden kann.

Die erfindungsgemäße Imprägnierflüssigkeit enthält ein ausgewogenes Verhältnis zwischen wasserlöslichen (Meth)acrylaten und (Meth)acrylaten mit hohem hydrophoben Anteil. Insbesondere wenn die Komponente Aa überwiegt, sind A/B-Verhältnisse zwischen 1,25 und 10 vorteilhaft, wobei mit Verhältnissen ≥ 2 und insbesondere ≥ 2,5 sowie ≤ 7 und insbesondere ≤ 5 beste Abwaschbarkeit erreicht wird. Entsprechend dieser Verhältnisse verschieben sich auch die oberen und unteren Grenzen der Komponenten A und B.

Die Komponenten A, B und C sind so bemessen, daß die Imprägnierflüssigkeit leicht abwaschbar ist und insbesondere eine selbst-emulgierende Mischung erhältlich ist. Selbst-emulgierend heißt, daß die Imprägnierflüssigkeit sich in Wasser, ggf. erhöhter Temperatur, spontan emulgiert. Dies erlaubt ein einfaches Abspülen von außen an einem zu imprägnierenden Körper anhaftender Imprägnierflüssigkeit, wobei die sich in Poren des zu imprägnierenden Körpers befindliche Imprägnierflüssigkeit in diesen verbleibt und anschließend, z. B. durch Erwärmen, polymerisiert werden kann. Geeignete Körper sind insbesondere Gußteile oder Sinterteile aus Metall, wobei Poren unter 0,2 mm i. d. R. nach einer Imprägnierung und Poren zwischen 0,2 und 0,5 mm nach wenigen Imprägnierungen verschlossen sind. Größere Öffnungen, wie Gewindebohrungen, bleiben frei.

Besonders vorteilhafte Imprägnierflüssigkeiten gemäß der vorliegenden Erfindung zeichnen sich dadurch aus, daß die einzelnen Komponenten derart aufeinander abgestimmt sind, daß 1 ml der Imprägnierflüssigkeit aus ca. 10 cm Höhe über 1 min in 50 ml Wasser der Temperatur 90°C getropft, spätestens nach weiteren 15 s zu mind. 90 % emulgiert ist.

Die Imprägnierflüssigkeit kann gewünschtenfalls noch weitere copolymerisierbare Monomere enthalten, solange Abwaschbarkeit mit Wasser, Polymerisierbarkeit und Widerstandsfähigkeit des Polymerisats hierdurch nicht beeinträchtigt wird. Üblicherweise sind diese zusätzlichen Comonomere auf höchstens 5 Gew.-% beschränkt.

Für die Komponente Aa kommen solche (Meth)acrylat-Verbindungen in Betracht, die mit den anderen Komponenten mischbar sind. Dies sind insbesondere Alkylester mit einer oder mehreren Hydroxygruppen bzw. (Meth)acrylester niedriger Polyalkoxy-Verbindungen sowie Aminoalkyl(meth)acrylate. Die Amino(meth)acrylate können primäre, sekundäre, tertiäre oder Ammoniumverbindungen sein, d. h. entsprechende Substituenten tragen. Die Hydroxygruppen können primär, sekundär oder tertiär sein. Besonders vorteilhaft werden solche Verbindungen Aa eingesetzt, die zu mind. 35 Gew.-% in Wasser (d. h. zu mind. 350 g Aa/kg Lösung) und insbesondere zu mind. 50 Gew.-% löslich sind. Bevorzugte Verbindungen sind Hydroxyethyl(meth)acrylat, Di-, Tri-, Tetraethylenglycolmono(meth)acrylat, Hydroxypropylacrylat, Aminoalkyl(meth)acrylat.

Die Imprägnierflüssigkeit wird vorzugsweise mit solchen polymerisationsbeeinflußenden Komponenten versetzt, die aus der gesamten Mischung eine warmhärtbare Imprägnierflüssigkeit machen. Geeignet sind hierfür Zusätze von Radikalbildnern und Inhibitoren, wobei als Radikalbildner insbesondere Azo-Verbindungen, wie 2,2'-Azobisisobutyronitril (AIBN, AZDN), 1,1'-Azobis(1-cyclohexancarbonitril) (CHDN), 2,2'-Azobis(2,4-dimethylvaleronitril) (DMVN), 2,2'-Azobis(2-methylbutyronitril), 4,4'-Azobis(4-cyanopentansäure), Dimethyl-2,2'-azobisisobutyrat. Grundsätzlich können auch peroxydische Katalysatoren eingesetzt werden, wie z. B. Benzoylperoxid, Methylethylketonperoxid, verschiedene Alkylperester, Cumolhydroperoxid. Diese Radikalbildner werden üblicherweise zu max. 10 Gew.-% der Gesamtmischung zugesetzt, üblich sind 0,1 - 5 Gew.-%, bei Azo-Verbindungen 0,01 - 2 Gew.-%. Der Einsatz des Radikalbildners erfolgt vorzugsweise in Lösung (ggf. eines Teils) des Weichmacheranteils. Um ein vorzeitiges Polymerisieren zu verhindern, werden der Mischung außerdem üblicherweise Inhibitoren zugegeben, wobei diese meist grundsätzlich schon in der Monomermischung enthalten sind. Bei heißhärtenden Systemen kann der Katalysator zusammen mit dem Inhibitor in der Monomermischung enthalten sein, wobei bei entsprechender Abstimmung der Komponenten diese Mischung monatelang lagerfähig ist. Als Inhibitoren eignen sich insbesondere Chinon-Verbindungen, wie Hydrochinonmonomethylether (MEHQ), β-Naphthochinon und p-Benzochinon; Phenole, wie p- oder m-Kresol; sterisch gehinderte Phenole, wie 2,6-Di-tert-butyl-p-kresol, 2,5-Di-tert-butyl-hydrochinon.

Als Weichmacher eignen sich z. B. handelsübliche Weichmacher, beispielsweise Phthalate.

Als Komponente C kommen nicht reaktive sowie reaktive Tenside bzw. Detergenzien in Betracht, d. h. auch solche, die eine zur radikalischen Polymerisation befähigte Gruppe enthalten. Besonders geeignete Tenside sind anionische oder nicht ionische Tenside und deren Mischungen, wobei das Tensid mit den übrigen Komponenten mischbar sein soll und die Polymerisation nicht hindern soll. Geeignete Tenside können, wie in der US-A- 4,069,378 beschrieben, ermittelt werden. Beispiele für Tenside sind polyalkoxylierter C₈ -C₂₀-Alkohol, polyalkoxylierter (substituierter) Aromat, Polyoxyethylen-Polyoxypropylen-Block-Copolymer, polyalkoxylierte Alkylacetylenalkohole oder -glycole. Üblicherweise ist der polyalkoxylierte Rest ein Polyethylenglycol und der hydrophobe Rest ist bevorzugt linear, wobei eine gewisse Verzweigung meist nicht störend ist und insbesondere beim substituierten Aromat unproblematisch ist. Der substituierte Aromat enthält üblicherweise einen C₄ - C₁₈-Rest. Derartige Tenside sind unter den Warenzeichen Siponic® (Alcolac Corp., Maryland, USA), Igepal® (GAF Corp., New York, USA) Arlypon® (Grünau, Deutschland), Pluronic® (BASF, Deutschland), Arkopal® (Hoechst AG, Deutschland), Surfynol® (AIRCO), erhältlich. Als Tensid sind ferner noch geeignet lineare oder verzweigte primäre oder sekundäre C₁₂ - C₁₈-Alkohole, C₈ - C₁₂-Alkylphenole, endständigblockierte Ethoxylate, insbesondere mit Benzyl-, Phenyl- oder Methyl- als Endgruppe, höhere Fettsäuren, Fettsäureethanolamide, Fettsäureamine, Fettsäureester von Polyhydroxy-Verbindungen. Der Polymerisationsgrad der Polyglycoletherketten ist verhältnismäßig unkritisch, je nach zu imprägnierendem Gegenstand, Polymerisationsverfahren oder Abwaschbarkeit kann das Tensid variiert werden. Aus den genannten Tensiden kann, wie in der EP-A 0 101 267 beschrieben, ein entsprechendes Tensid mit reaktiver Gruppe hergestellt werden.

Zu der Gruppe der zumindest teilweise wasserlöslichen Komponenten (A) gehören neben den schon genannten N,N-Dimethylaminopropyl(meth)acrylamid, 2-Trimethylammoniumethyl(meth)acrylatchlorid, Hydroxypropylmethacrylat.

Die Komponenten A können auch vernetzend wirken, wobei ein vernetzender Anteil typisch unter 30 Gew.-% in A liegt. Bevorzugt sind nicht vernetzende Verbindungen.

Als Komponente B kommen ethylenisch ungesättigte Monomere mit einem C₈ - C₂₀-Alkylrest zum Einsatz, wobei für den ethylenisch ungesättigten Rest (Meth)acrylat bevorzugt ist. Geeignete Verbindungen sind insbesondere auch Mischungen hinsichtlich des Alkylrestes. Beispiele sind insbesondere die C₁₀ bis C₁₄-Ester der (Meth)acrylsäure, insbesondere mit typischer homologen Verteilung der käuflichen Produkte. Einzelbeispiele sind Laurylmethacrylat, Dodecylacrylat, Decylacrylat, Decylmethacrylat.

Als sonstige Vernetzer können eingesetzt werden beispielsweise Divinylbenzol, Maleinsäurediallylester, Di-, Tri- und Tetraethylenglycoldi(meth)acrylat, Ethylenglycoldi(meth)acrylat, Allyl(meth)acrylat, Trimethylolpropantri(meth)acrylat. In Klammern gesetzte Bezeichnung, wie z. B. (meth), bedeutet, daß dieser Substituent optional ist.

Die Erfindung betrifft auch die Verwendung der Imprägnierflüssigkeit in einem Verfahren zur Imprägnierung eines porösen festen Gegenstandes, insbesondere eines Guß- oder Sinterteils aus Metall, durch Füllen der Poren mit einer polymerisierbaren Imprägnierflüssigkeit und Polymerisieren der Imprägnierflüssigkeit in den Poren, bei dem die Poren mit einer Imprägnierflüssigkeit enthaltend
A in Wasser zumindest zum Teil lösliches (Meth)acrylat bestehend aus 50-85 Gew.-%
   a in Wasser zu mind. 20 Gew.-% lösliches (Meth)acrylat und/oder bis 85 Gew.-%
   b in Wasser zu mind. 5 Gew.-% und weniger als 20 Gew.-% lösliches Hydroxyalkyl(meth)acrylat bis 80 Gew.-%
B ethylenisch ungesättigtes Monomer mit C₈-C₂₀-Alkylrest 4-40 Gew.-%
C Tensid 4-40 Gew.-%
gegebenenfalls D copolymerisierbare Monomere, limitiert auf 5 Gew.-%
gegebenenfalls E Vernetzer, limitiert auf max. 30 Gew.-%
   sowie
gegebenenfalls F einen Radikalbildner und einen Inhibitor,
wobei die A/B-Verhältnisse zwischen 1,25 und 10 liegen, die einzelnen Komponenten derart aufeinander abgestimmt sind, daß 1 ml der Imprägnierflüssigkeit aus ca. 10 cm Höhe über 1 min in 50 ml Wasser der Temperatur 90 °C getropft, spätestens nach weiteren 15 s zu mind. 90 % emulgiert ist und sich alle Gew.-%-Angaben (auch a und b) auf die Summe der Komponenten A-D beziehen, gefüllt werden.

Die im Verfahren verwendete Imprägnierflüssigkeit kann alle oben beschriebenen Details aufweisen, wobei insbesondere die Verwendung einer Imprägnierflüssigkeit vorteilhaft ist, die vor dem Füllen der Poren bereits ein Härtersystem enthält. Das Härtersystem ist vorteilhaft eine Kombination eines Radikalbildners und einem Inhibitor. Ein solches Härtersystem kann schon lange vor der Anwendung der Imprägnierflüssigkeit in diese eingemischt sein, da eine solche Imprägnierflüssigkeit monatelang bei Raumtemperatur lagerfähig ist.

Üblicherweise werden die Poren des porösen Gegenstandes durch Tauchen in die Imprägnierflüssigkeit und Anlegen eines Vakuums (meist ca. 1 - 3 mbar über ca. 5 min) gefüllt. Die Imprägnierflüssigkeit hat hierfür üblicherweise eine Viskosität von ca. 1 - 1000 mPas, insbesondere 5 - 200 mPas. Die erfindungsgemäße Imprägnierflüssigkeit hat bei dem Imprägnierverfahren den Vorteil, besonders leich abwaschbar zu sein, ohne daß die gefüllten Poren wieder freigewaschen werden.

Zum Abspülen der außen an dem zu imprägnierenden Gegenstand anhaftenden Imprägnierflüssigkeit wird dieser einfach in Wasser (ca. 20°C) getaucht und wieder herausgenommen. Nach ca. 3 - 10mal Tauchen ist die außen anhaftende Imprägnierflüssigkeit entfernt, ein Besprühen, längeres Verweilen oder sonstige Maßnahmen sind i. d. R. nicht notwendig.

Anschließend wird der Gegenstand bei Warmhärtung in ≥ 70°C heißes Wasser getaucht (meist ca. 90°C), wobei die in den Poren befindliche Imprägnierflüssigkeit meist nach 10 - 12 min ausgehärtet ist.

Alle oben erwähnten Einzelaspekte der vorliegenden Erfindung können die Besonderheiten, wie sie für die Imprägnierflüssigkeit oben beschrieben sind, enthalten. So kann z. B. ein Weichmacher auch in der verfahrensgemäßen Mischung eingesetzt werden, etc.

Die Erfindung wird im folgenden anhand von Beispielen näher ausgeführt.

### Beispiel 1 (alle Angaben in Gewichtsteilen)

| | |
|---|---|
| HEMA (Hydroxyethylmethacrylat) | 50 Teile |
| 2-Ethylhexylmethacrylat | 40 Teile |
| Alkylphenolpolyglycolether | 10 Teile |
| AIBN (2,2'-Azobisisobutyronitril) | 0,1 Teile |
| MEHQ (Hydrochinonmonomethylether) | 250 ppm |

werden miteinander vermischt. Mit der Mischung werden folgende Tests durchgeführt: Emulgierbarkeit im kalten und warmen Wasser, Elastizitätprüfung des Polymers, Imprägnieren eines Aluminiumgußteils (Getriebegehäuse).

Die Emulgierbarkeit wird durch einen Tropfentest bestimmt.

Der Tropfentest stellt eine visuelle Beurteilung der Emulgiereigenschaften dar und dient zur Ermittlung des Abwaschverhaltens von Imprägniermedien.
Zu diesem Zweck wird ein 3 1 Becherglas niedrige Form (Höhe 210 mm, A Ø 150 mm von Schott) zu dreiviertel mit Wasser gefüllt und auf 90 ± 2°C temperiert. Das mit Wasser gefüllte Becherglas dient als Härtebad. In das Härtebad wird ein Reagenzglas einfache Form (200 × 30 mm von Schott), in dem 50 ml Wasser vorgelegt sind (ca. halb voll), bis zum oberen Rand eingetaucht.
Über der Reagenzglasöffnung ist eine Mikrobürette (Glas von Hirschmann, 2 ml Inhalt, 0,01 ml Unterteilung, 0,01 ml Toleranz) angebracht. Der Abstand Öffnung Mikrobürette zur Wasseroberfläche im Reagenzglas beträgt ca. 10 cm. die Bürette wird mit dem zu prüfenden Imprägniermedium befüllt.
Sobald das Wasser im Reagenzglas 90°C erreicht hat, tropft man 1 ml Imprägnierflüssigkeit aus der Bürette zu (innerhalb 1 min).

Das Verhalten der in der Flüssigkeit eintretenden Tröpfchen wird durch das Becherglas beobachtet. Das Wasser im Reagenzglas wird nicht gerührt.

15 s nach Ende des Zutropfens muß die Imprägnierflüssigkeit zu mind. 90 % emulgiert sein.

Bei der Imprägnierung wird die Eindrehbarkeit von Schrauben und die Dichtigkeit (durchgehende Poren) bestimmt.

Für die Elastizität wird ein Polymer aus ca. 20 g Imprägnierflüssigkeit hergestellt, wobei das erhaltene Polymer auf Fingerdruck elastisch reagieren soll. An diesem Polymer wird außerdem durch Erhitzen auf 200°C über einen Zeitraum von 12 h der Gewichtsverlust bestimmt, dieser soll unter 2 % und insbesondere unter 1 % liegen.

### Beispiel 2

| | |
|---|---|
| HPMA (Hydroxypropylmethacrylat) | 80 Teile |
| LMA (Laurylmethacrylat) | 10 Teile |
| Alkylphenolpolyglycolether | 10 Teile |
| AIBN | 0,1 Teile |
| MEHQ | 250 ppm |

werden miteinander vermischt und die Mischung wie unter Beispiel 1 beschrieben untersucht.

### Beispiel 3

| | |
|---|---|
| HEMA | 70 Teile |
| LMA | 20 Teile |
| Alkylphenolpolyglycolether | 10 Teile |
| AIBN | 0,1 Teile |
| MEHQ | 250 ppm |

werden miteinander vermischt und die Mischung wie unter Beispiel 1 beschrieben untersucht.

### Beispiel 4

| | |
|---|---|
| HEMA | 50 Teile |
| LMA | 18 Teile |
| Dodecylacrylat | 22 Teile |
| Alkylphenolpolyglycolether | 10 Teile |
| AIBN | 0,1 Teile |
| MEHQ | 250 ppm |

werden miteinander vermischt und die Mischung wie unter Beispiel 1 beschrieben untersucht.

### Beispiel 5

| | |
|---|---|
| HEMA | 65 Teile |
| LMA | 20 Teile |
| TEDMA (Triethylenglycoldi(meth)acrylat) | 5 Teile |
| Alkylphenolpolyglycolether | 10 Teile |
| AIBN | 0,1 Teile |
| MEHQ | 250 ppm |

werden miteinander vermischt und die Mischung wie unter Beispiel 1 beschrieben untersucht.

### Beispiel 6

| | |
|---|---|
| HEMA | 62 Teile |
| LMA | 20 Teile |
| Maleinsäurediallylester | 8 Teile |
| Alkylphenolpolyglycolether | 10 Teile |
| AIBN | 0,1 Teile |
| MEHQ | 250 ppm |

werden miteinander vermischt und die Mischung wie unter Beispiel 1 beschrieben untersucht.

### Beispiel 7

| | |
|---|---|
| HEMA | 50 Teile |
| LMA | 20 Teile |
| Vinyllaurat | 20 Teile |
| Alkylphenolpolyglycolether | 10 Teile |
| AIBN | 0,1 Teile |
| MEHQ | 250 ppm |

werden miteinander vermischt und die Mischung wie unter Beispiel 1 beschrieben untersucht.

### Beispiel 8

| | |
|---|---|
| HEMA | 62,5 Teile |
| LMA | 17,5 Teile |
| TEDMA | 5 Teile |
| Alkylphenolpolyglycolether | 10 Teile |
| Dibutylphthalat | 5 Teile |
| AIBN | 0,1 Teile |
| MEHQ | 250 ppm |

werden miteinander vermischt und die Mischung wie unter Beispiel 1 beschrieben untersucht.

### Beispiel 9

| | |
|---|---|
| HEMA | 50 Teile |
| LMA | 20 Teile |
| Dioctylphthalat | 3 Teile |
| Vinyllaurat | 20 Teile |
| Alkylphenolpolyglycolether | 7 Teile |
| AIBN | 0,1 Teile |
| MEHQ | 250 ppm |

werden miteinander vermischt und die Mischung wie unter Beispiel 1 beschrieben untersucht.

Die Ergebnisse sind in der Tabelle aufgeführt.

| Beispiel | Emulgierbarkeit¹⁾ | | Imprägnierung²⁾ | Elastizität³⁾ | Tempern⁴⁾ |
|---|---|---|---|---|---|
| | 20°C | 90°C | | | |
| 1 | + | + | + | + | + |
| 2 | + | 0 | + | + | + |
| 3 | + | ++ | + | + | + |
| 4 | + | ++ | - | + | 0 |
| 5 | 0 | + | 0 | + | 0 |
| 6 | ++ | + | + | + | 0 |
| 7 | ++ | + | + | + | 0 |
| 8 | 0 | + | 0 | + | 0 |
| 9 | + | + | + | + | 0 |

| | | | | | |
|---|---|---|---|---|---|
| 1) ++ emulgiert spontan stabil; + emulgiert in Sekunden, stabil; 0 emulgiert in Sekunden, später Phasentrennung | | | | | |
| 2) + dicht und schraubbar; 0 wenig Restporosität; - 30 % Restporosität | | | | | |
| 3) + auf Daumendruck elastisch | | | | | |
| 4) + Gewichtsverlust ≤ 1 %: 0 Gewichtsverlust ≤ 2 % | | | | | |

## Patentansprüche

1. Imprägnierflüssigkeit, enthaltend
A in Wasser zumindest zum Teil lösliches (Meth)acrylat bestehend aus 50-85 Gew.-%
a in Wasser zu mind. 20 Gew.-% lösliches (Meth)acrylat und/oder bis 85 Gew.-%
b in Wasser zu mind. 5 Gew.-% und weniger als 20 Gew.-% lösliches Hydroxyalkyl(meth)acrylat bis 80 Gew.-%
B ethylenisch ungesättigtes Monomer mit C₈-C₂₀-Alkylrest 4-40 Gew.-%
C Tensid 4-40 Gew.-%
gegebenenfalls D copolymerisierbare Monomere, limitiert auf 5 Gew.-%
gegebenenfalls E Vernetzer, limitiert auf max. 30 Gew.-%
sowie
gegebenenfalls F einen Radikalbildner und einen Inhibitor,
wobei die einzelnen Komponenten derart aufeinander abgestimmt sind, daß 1 ml der Imprägnierflüssigkeit aus ca. 10 cm Höhe über 1 min in 50 ml Wasser der Temperatur 90 °C getropft, spätestens nach weiteren 15 s zu mind. 90 % emulgiert ist und
sich alle Gew.-%-Angaben auf die Summe der Komponenten A-D (auch a und b) beziehen.

2. Imprägnierflüssigkeit nach Anspruch 1,
**dadurch gekennzeichnet,**
daß
E Vernetzer auf darunter 10 Gew.-%,
(meth)acrylische Vernetzer auf 6 Gew.-%
limitiert sind.

3. Imprägnierflüssigkeit nach Anspruch 1,
**dadurch gekennzeichnet,**
daß die A/B-Verhältnisse zwischen 2,5 und 7 liegen.

4. Imprägnierflüssigkeit nach einem der vorhergehenden Ansprüche,
**dadurch gekennzeichnet,**
daß sie bis zu 20 Gew.-% an Weichmacher enthält.

5. Verwendung einer Imprägnierflüssigkeit gemäß einem der Ansprüche 1-4 in einem Verfahren zur Imprägnierung eines porösen festen Gegenstandes, insbesondere eines Guß- oder Sinterteils aus Metall, durch in an sich bekannter Weise Füllen der Poren mit einer polymerisierbaren Imprägnierflüssigkeit, Abspülen des festen Gegenstandes nach dem Füllen der Poren mit der Imprägnierflüssigkeit mit Wasser und Polymerisieren der Imprägnierflüssigkeit in den Poren.

6. Verwendung nach Anspruch 5,
**dadurch gekennzeichnet,**
daß die Imprägnierflüssigkeit vor dem Einbringen in die Poren mit einem Radikalbildner und einem Inhibitor versetzt wird.

7. Verwendung nach einem der Ansprüche 5 oder 6,
**dadurch gekennzeichnet,**
daß die in den Poren befindliche Imprägnierflüssigkeit durch Tauchen des festen Gegenstandes in Wasser einer Temperatur ≥70 °C polymerisiert wird.

## Claims

1. Impregnating liquid containing
A (meth)acrylate at least partially soluble in water consisting of 50-85 wt.%
a (meth)acrylate at least 20 wt.% soluble in water and/or up to 85 wt.%
b hydroxyalkyl (meth)acrylate at least 5 wt.% and less than 20 wt.% soluble in water up to 80 wt.%
B ethylenically unsaturated monomer containing a C₈-C₂₀ alkyl residue 4-40 wt.%
C surfactant 4-40 wt.%
optionally D copolymerisable monomers, limited to 5 wt.%
optionally E crosslinking agent, limited to at most 30 wt.%
optionally
together with F a radical former and an inhibitor,
wherein the individual components are adjusted relative to each other in such a manner that 1 ml of the impregnating liquid added dropwise from a height of approx. 10 cm within 1 minute to 50 ml of water at a temperature of 90°C is at least 90% emulsified after a further 15 seconds and all the weight percentages relate to the sum of components A-D (including a and b).

2. Impregnating liquid according to claim 1,
characterised in that
E crosslinking agents are limited to 10 wt.%
with (meth) acrylic crosslinking agents being limited to 6 wt.%.

3. Impregnating liquid according to claim 1,
characterised in that
the A/B ratios are between 2.5 and 7.

4. Impregnating liquid according to one of the preceding claims,
characterised in that
it contains up to 20 wt.% of plasticiser.

5. Use of an impregnating liquid according to one of claims 1-4 in a process for impregnating a porous solid article, in particular a casting or sintered component made from metal, by filling the pores in a manner known *per se* with a polymerisable impregnating liquid, rinsing the solid object with water once the pores have been filled with the impregnating liquid and polymerising the impregnating liquid in the pores.

6. Use according to claim 5,
characterised in that,
before the impregnating liquid is introduced into the pores, it is combined with a radical former and an inhibitor.

7. Use according to one of claims 5 or 6,
characterised in that
the impregnating liquid located in the pores is polymerised by immersing the solid object in water at a temperature of ≥ 70°C.

## Revendications

1. Liquide d'imprégnation contenant
A un (méth)acrylate au moins en partie soluble dans l'eau 50-85 % en poids
constitué de
a un (méth)acrylate soluble dans l'eau à au moins 20 % en poids jusqu'à 85 % en poids
et/ou
b un (méth)acrylate d'hydroxyalkyle soluble dans l'eau à au moins 5 % en poids et à moins de 20 % en poids jusqu'à 80 % en poids
B un monomère éthyléniquement insaturé ayant un radical alkyle comportant de 8 à 20 atomes de carbone 4-40 % en poids
C un agent tensioactif 4-40 % en poids
le cas échéant
D des monomères copolymérisables, limités à 5 % en poids
le cas échéant
E des agents réticulents, limités au maximum à 30 % en poids
ainsi que
le cas échéant
F un formateur de radicaux et un inhibiteur,
les divers composants étant déterminés les uns par rapport aux autres de manière qu'un ml de liquide d'imprégnation versé goutte à goutte d'une hauteur d'environ 10 cm pendant une minute dans 50 ml d'eau à une température de 90°C soit émulsifié au plus tard au bout de 15 secondes supplémentaires à au moins 90 %, et toutes les données en pourcentages (y compris a et b) se rapportant à la somme des composants A-D.

2. Liquide d'imprégnation selon la revendication 1,
caractérisé en ce qu'
on limite
E les agents réticulents à 10 % en poids
et parmi eux
les agents réticulents (méth)acryliques à 6 % en poids.

3. Liquide d'imprégnation selon la revendication 1,
caractérisé en ce que
les rapports A/B sont compris entre 2,5 et 7.

4. Liquide d'imprégnation selon l'une des revendications précédentes,
caractérisé en ce qu'
il contient jusqu'à 20 % en poids d'un plastifiant.

5. Utilisation d'un liquide d'imprégnation selon l'une des revendications 1-4 dans un procédé d'imprégnation d'un article solide poreux, en particulier d'une pièce coulée ou frittée en métal, par un remplissage des pores en soi connu avec un liquide d'imprégnation polymérisable, rinçage de l'article solide après remplissage des pores avec le liquide d'imprégnation en utilisant de l'eau et polymérisation du liquide d'imprégnation dans les pores.

6. Utilisation selon la revendication 5,
caractérisée en ce que
le liquide d'imprégnation est mélangé avant l'introduction dans les pores avec un agent formateur de radicaux et un inhibiteur.

7. Utilisation selon la revendication 5 ou 6,
caractérisée en ce que
le liquide d'imprégnation se trouvant dans les pores est polymérisé par immersion de l'article solide dans l'eau à une température supérieure ou égale à 70°C.
